# EUROPEAN PATENT SPECIFICATION

(11) **EP 2 161 168 B1**
(45) Date of publication and mention of the grant of the patent: **08.05.2013**
(21) Application number: 08425588.4
(22) Date of filing: 04.09.2008
(51) Int. Cl.: B60R 25/10, G08B 13/00

(54) **Fuel anti-theft and control method and device for vehicular application**
Diebstahlsicherungsverfahren und Vorrichtung sowie Kraftstoffüberwachungsssytem für Fahrzeuge
Procédé et dispositif antivol et système de surveillance du carburant pour véhicule

(43) Date of publication of application: 10.03.2010
(73) Proprietor: Iveco S.p.A., 10156 Torino (IT)
(72) Inventor: Bertozzi, Franco, 10040 Druento (IT)
(74) Representative: Borsano, Corrado

(56) References cited:
- GB-A- 2 338 308
- US-A1- 2002 109 408

## Description

The present invention relates to a fuel anti-theft and control method and device for vehicular application.

Fuel theft is an increasingly frequent phenomenon, especially in the case of industrial or commercial vehicles, and provokes damages that are no longer negligible, since fuel is more and more expensive.

Generally, large-sized vehicles, such as industrial or commercial vehicles, are equipped with one or even two very capacious fuel tanks, which therefore make the economical damage in case of theft to increase. Moreover, these tanks are usually fixed outside the vehicle, in a position that is easily reachable, and are equipped with a drain plug at the bottom, used for cleaning the tank, which is also easily reachable. Or, in case two tanks are present, there is a connection pipe between the two for the transfer of the fuel, and it is also easily reachable.

In short, a fuel theft is an easy and rapid operation, which is carried out most of all when the vehicle is stationary and the engine is stopped, for example at night when the vehicle is parked in a rest area and the driver is sleeping, even in the cabin.

Fuel anti-theft systems with reinforced metallic grids in the manifold behind the tank drain plug are known in the art.

Or, from the Italian patent application n. MI2006A001819 on behalf of the same applicant, a fuel anti-theft and control method for vehicular application is known, and comprises the steps of: continuous monitoring system of the fuel level, when the vehicle is stationary and the ignition key is not inserted; if the fuel level lowers in this situation, the anomalous condition is identified as theft and an alarm signal is generated, see for example US2002-0109408.

Said known systems are not particularly effective in all the possible situations, for example when the thief does not use the fuel tank input manifold, but for example he/she slips under the vehicle and takes the fuel from other points on the tank, such as the drain plug.

Therefore the aim of the present invention is to provide a fuel anti-theft and control method and device, for vehicular application suitable for overcoming all the drawbacks mentioned above.

The object of the present invention is a fuel anti-theft control method for vehicular application when the vehicle is stationary and the engine is stopped or at idle comprising the steps of:
- monitoring the whole vehicle perimeter by means of perimetral sensors (S) detecting the presence of persons or obstacles, placed along said vehicle perimeter;
- monitoring the fuel level;
- if said perimetral sensors detect persons or obstacles and the fuel level lowers beyond a threshold, said anomalous lowering is identified as theft and an alarm signal is generated.

This invention refers in particular to a fuel anti-theft and control method and device for vehicular application, as described more fully in the claims, which are an integral part of this description.

Further purposes and advantages of the present invention will become clear from the following detailed description of a preferred embodiment (and relative alternative embodiments) and the drawings that are attached hereto, which are merely illustrative and not limitative, in which:
figure 1 schematically shows a vehicle equipped with fuel anti-theft sensors that are object of the invention;
figure 2 shows a block diagram of the control device that are object of the invention.

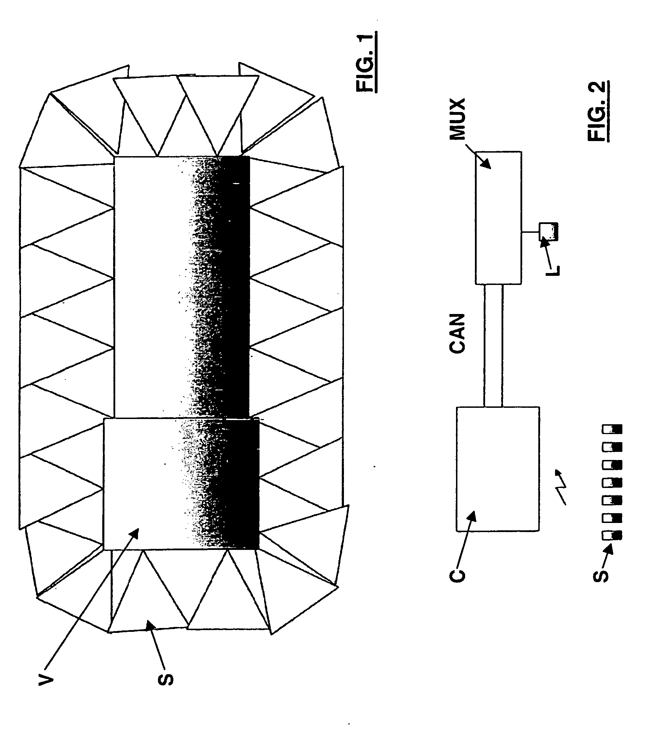

With reference to figure 1, the fuel anti-theft and control device object of the invention provides the vehicle V with perimetral sensors S along the whole vehicle perimeter.

The sensors may be of a known type, for example of a ultrasound or infrared type, placed at a relative distance both vertically and horizontally, so that their aperture cone of emission and detection does not leave empty spaces around the vehicle, starting from a determined distance from it, for example 1 m, and so that it is near to the ground, in order to detect intrusions under the vehicle.

The relative positioning of the sensors at a distance of about 80 cm on the lateral sides and of about 40 cm on the front and on the back side may for example guarantee an overall perimetral control.

Sensors already used for other functions may be advantageously used, such as for example those used as reverse gear indicator, in order to detect the distance from back obstacles, for example for assisting the parking manoeuvre or the vehicle driving, or those used by the control systems in order to avoid that the vehicle starts when persons or object are very near.

In order to avoid that the numerous necessary sensors S consume too much current, they may be fed sequentially, for example one by one, or by two opposed sensors, for example by pairs, feeding them for 5ms in a succession, as to cover the whole vehicle perimeter in about 1 second.

Also with reference to figure 2, the fuel level is continuously monitored by a high-resolution fuel level sensor L, for example the level sensor already present in the tank. Its high sensibility may be necessary to detect a fuel level lowering that is not high, but is all the same remarkable, considering that the fuel tank capacity of the industrial vehicles may be high and that they may contain a high quantity of fuel.

Being the sensors S numerous, they may be connected to the vehicular control unit C without cables, in wireless or Wi-Fi mode, in order to limit the need for cables.

Therefore the fuel level is continuously monitored, also when the vehicle is stationary and the engine is stopped and the ignition key is not inserted. If in this situation a lowering of the fuel level takes place, this anomalous condition is identified as theft, when the presence of persons or obstacles is detected by the sensors S.

The usual signal indicating the fuel level that is already active when the engine is started, is now sent to the vehicular control unit C, for example by means of devices already known in the art and present in the vehicle, for example a multiplex system MUX connected by means of a CAN bus to the control unit C.

Moreover, a signal indicating that the engine is started is already present, generated by the alternator dragged by the engine. The absence of this signal indicates that the engine is stopped. It is also already present a signal indicating that the vehicle is stationary, given by the speedometer which indicates 0.

According to the invention the alarm signal is generated if there is a lowering of the fuel level, when the vehicle is stationary, the engine is stopped (typically these are the ideal conditions for the fuel theft by ill-intentioned persons or by the driver himself/herself) and when the sensors S detect the presence of persons or obstacles.

Also, there is a normal fuel consumption when the vehicle is stationary, for example for the functioning of an auxiliary heater for the cabin, or of an auxiliary engine for a refrigerator. In these cases, the emptying of the fuel tank is very slow, for example with a speed lower that 5-10 litres/hours, and therefore is regular.

In case the service key is inserted and/or the engine is started, even though the vehicle is stationary, the system detects and continually controls the fuel level. Once a threshold of the tank emptying speed is defined, the tank emptying speed being determined by the quantity of fuel necessary to the engine and/or to the additional heater (optional), in case said threshold is exceeded the control unit stores the information about date and time of the possible anomalous withdrawal.

Therefore preferably the alarm indication is generated when the tank emptying speed exceeds a threshold value, for example that mentioned before of 5-10 litres/hour.

The activation of the perimetral control by the sensors S may be controlled by the driver or may be automatically activated when the vehicle is stationary and the engine is stopped or at idle.

The deactivation of the system may be allowed only by the operation headquarters, upon driver's request. This allows to prevent the thefts committed by the drivers themselves, which are rather frequent.

The alarm signal may activate vehicular alarm signals, such as visual systems (blinkers), or acoustic signals (sirens).

The alarm signal may be sent to a control and/or assistance center, by radio by means of the vehicular antenna. The driver may be informed of this service by means of a relative indication of the dashboard, or he/she may not be informed, considering that, unfortunately, it happens that the driver himself/herself is involved in the theft.

If the system detects the presence of someone, it may send an alarm message that activates an internal buzzer for the driver or an external siren, or that activates the blinkers or that makes an alarm call to the police or to the carrier's operation headquarters.

If the vehicle is equipped with a GPS system, it is also possible to send the position of the vehicle via the GPS network, in order to help the police localize the vehicle as fast as possible.

It is evident that the operations described above may be easily carried out by appropriately programming a vehicular control unit which is normally already present on the vehicle, using the programming techniques available to the person skilled in the art.

Therefore the present invention may advantageously be carried out by means of a computer program, which comprises program code means performing one or more steps of said method, when said program is run on a computer. For this reason the scope of the present patent is meant to cover also said computer program and the computer-readable means that comprises a recorded message, such computer-readable means comprising the program code means for performing one or more steps of such method, when such program is run on a computer.

The device for applying the method comprises also means for the remote control by means of an antenna, acoustic alarms, such as sirens, and visual alarm, such as blinkers.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details.

## Claims

1. Method for fuel anti-theft control for vehicular application, when the vehicle is stationary and the engine is stopped or at idle **characterized in that** it comprises the steps of:
- monitoring the whole vehicle perimeter by means of perimetral sensors (S) detecting the presence of persons or obstacles, placed along said vehicle perimeter;
- monitoring the fuel level;
- if said perimetral sensors detect persons or obstacles and the fuel level lowers beyond a threshold, said anomalous lowering is identified as theft and an alarm signal is generated.

2. Method for fuel anti-theft control for vehicular application according to claim 1, wherein said sensors are placed at a relative distance both vertically and horizontally, so that their aperture cone of emission and detection does not leaves empty spaces around the vehicle, starting from a determined distance from it, for example 1 m, and so that it is near to the ground.

3. Method for fuel anti-theft control for vehicular application according to claim 1, wherein said sensors are fed in a sequential way, for example one by one or by pairs of two opposed sensors, in order to cover the whole vehicle perimeter in about a second.

4. Method for fuel anti-theft control for vehicular application according to claim 1, wherein said sensors are connected to a vehicular control unit (C) without cables, in wireless or Wi-Fi mode.

5. Method for fuel anti-theft control for vehicular application according to claim 1, wherein said alarm signal is sent to a control and/or assistance center, by radio by means of the vehicular antenna.

6. Method for fuel anti-theft control for vehicular application according to claim 1, wherein said alarm signal activates vehicular alarm signals, such as visual signals (blinkers, or acoustic signals (sirens).

7. Method for fuel anti-theft control for vehicular application according to claim 1, wherein said alarm signal is generated when the fuel tank emptying speed exceeds a threshold value.

8. Method for fuel anti-theft control for vehicular application according to any of the previous claims, wherein one or more of the following signals are used:
- a signal coming from said perimetral sensors (S), detecting the presence of persons or obstacles;
- a signal indicating the fuel level, which is already active when the engine is started, which is sent to a vehicular control unit;
- a signal indicating that the engine is started, generated by the alternator dragged by the engine, the absence of this signal indicates that the engine is stopped;
- a signal indicating that the vehicle is stationary, given by the speedometer which indicates 0.

9. Device for fuel anti-theft and control for vehicular application, **characterized in that** it comprises means for the application of the method according to any of the previous claims.

10. Computer program comprising program code means suitable for performing the steps of any claim from 1 to 8, when such program is run on a computer.

11. Computer-readable means comprising a recorded program, said computer-readable means comprising program code means suitable for performing the steps according to the claims from 1 to 8, when said program is run on a computer.

## Patentansprüche

1. Steuerungsverfahren zur Verhinderung des Diebstahls von Kraftstoff für eine Fahrzeuganwendung, wenn das Fahrzeug steht und die Kraftmaschine gestoppt ist oder sich im Leerlauf befindet,
**dadurch gekennzeichnet, dass** das Verfahren die Schritte umfasst, dass:
- der Umfang des gesamten Fahrzeugs mit Hilfe von entlang des Fahrzeugumfangs platzierten Umfangssensoren (S), welche die Anwesenheit von Personen oder Hindernissen detektieren, überwacht wird;
- der Kraftstoffpegel überwacht wird;
- wenn die Umfangssensoren Personen oder Hindernisse detektieren und der Kraftstoffpegel unter einen Schwellenwert absinkt, diese anormale Absenkung als Diebstahl identifiziert wird und ein Alarmsignal erzeugt wird.

2. Steuerungsverfahren zur Verhinderung des Diebstahls von Kraftstoff für eine Fahrzeuganwendung nach Anspruch 1,
wobei die Sensoren mit einer relativen Distanz sowohl vertikal als auch horizontal so platziert sind, dass ihr Emissions- und
Detektions-Öffnungskegel keine leeren Räume um das Fahrzeug herum übrig lässt, wobei er bei einer bestimmten Distanz von diesem, zum Beispiel ein Meter, startet, und so, dass er sich nahe am Boden befindet.

3. Steuerungsverfahren zur Verhinderung des Diebstahls von Kraftstoff für eine Fahrzeuganwendung nach Anspruch 1,
wobei die Sensoren auf sequentielle Weise gespeist werden, zum Beispiel einer nach dem anderen oder als Paare von zwei entgegengesetzten Sensoren, um den gesamten Fahrzeugumfang in etwa einer Sekunde abzudecken.

4. Steuerungsverfahren zur Verhinderung des Diebstahls von Kraftstoff für eine Fahrzeuganwendung nach Anspruch 1,
wobei die Sensoren mit einer Fahrzeugsteuerungseinheit (C) ohne Verdrahtung in einem Funk- oder WiFi-Modus verbunden sind.

5. Steuerungsverfahren zur Verhinderung des Diebstahls von Kraftstoff für eine Fahrzeuganwendung nach Anspruch 1,
wobei das Alarmsignal an ein Kontroll- und/oder Unterstützungszentrum durch Funk mit Hilfe der Fahrzeugantenne gesendet wird.

6. Steuerungsverfahren zur Verhinderung des Diebstahls von Kraftstoff für eine Fahrzeuganwendung nach Anspruch 1,
wobei das Alarmsignal Fahrzeugalarmsignale aktiviert, etwa visuelle Signale (Blinker) oder akustische Signale (Hupen).

7. Steuerungsverfahren zur Verhinderung des Diebstahls von Kraftstoff für eine Fahrzeuganwendung nach Anspruch 1,
wobei das Alarmsignal erzeugt wird, wenn die Entleerungsgeschwindigkeit des Kraftstofftanks einen Schwellenwert überschreitet.

8. Steuerungsverfahren zur Verhinderung des Diebstahls von Kraftstoff für eine Fahrzeuganwendung nach einem der vorherigen Ansprüche, wobei ein oder mehrere der folgenden Signale verwendet werden:
- ein von den Umfangssensoren (S) stammendes Signal, das die Anwesenheit von Personen oder Hindernissen detektiert;
- ein Signal, das den Kraftstoffpegel anzeigt, welches bereits aktiv ist, wenn die Kraftmaschine gestartet wird und das an eine Fahrzeugsteuerungseinheit gesendet wird;
- ein Signal, das anzeigt, dass die Kraftmaschine gestartet ist, welches von der Lichtmaschine erzeugt wird, die von der Kraftmaschine angetrieben wird, wobei das Fehlen dieses Signals anzeigt, dass die Kraftmaschine gestoppt ist;
- ein Signal, das anzeigt, dass das Fahrzeug steht, welches durch den Tachometer angegeben wird, der Null anzeigt.

9. Steuerungsvorrichtung zur Verhinderung des Diebstahls von Kraftstoff für eine Fahrzeuganwendung,
**dadurch gekennzeichnet, dass**
sie ein Mittel zum Anwenden des Verfahrens nach einem der vorherigen Ansprüche umfasst.

10. Computerprogramm, das ein Programmcodemittel umfasst, das geeignet ist, um die Schritte eines beliebigen der Ansprüche 1 bis 8 auszuführen, wenn dieses Programm auf einen Computer laufen gelassen wird.

11. Computerlesbares Mittel, das ein aufgezeichnetes Programm umfasst, wobei das computerlesbare Mittel ein Programmcodemittel umfasst, das geeignet ist, um die Schritte gemäß den Ansprüchen von 1 bis 8 auszuführen, wenn das Programm auf einem Computer laufen gelassen wird.

## Revendications

1. Procédé de contrôle antivol de carburant pour une application à un véhicule, lorsque le véhicule est immobile et que le moteur est arrêté ou au ralenti, **caractérisé en ce qu'**il comprend les étapes :
- de surveillance du périmètre entier du véhicule au moyen de capteurs périmétraux (S) détectant la présence de personnes ou d'obstacles, placés le long dudit périmètre du véhicule ;
- de surveillance du niveau de carburant ;
- si lesdits capteurs périmétraux détectent des personnes ou des obstacles et si le niveau de carburant diminue au-delà d'un seuil, ladite diminution anormale est identifiée comme un vol et un signal d'alarme est généré.

2. Procédé de contrôle antivol de carburant pour une application à un véhicule selon la revendication 1, dans lequel lesdits capteurs sont placés à une distance relative à la fois verticalement et horizontalement, de sorte que leur cône d'ouverture d'émission et de détection ne laisse pas d'espaces vides autour du véhicule, en commençant à une distance déterminée de celui-ci, par exemple 1 m, et de sorte qu'il soit près du sol.

3. Procédé de contrôle antivol de carburant pour une application à un véhicule selon la revendication 1, dans lequel lesdits capteurs sont alimentés d'une manière séquentielle, par exemple un par un ou par paires de deux capteurs opposés, afin de couvrir le périmètre entier du véhicule en environ une seconde.

4. Procédé de contrôle antivol de carburant pour une application à un véhicule selon la revendication 1, dans lequel lesdits capteurs sont connectés à une unité de commande de véhicule (C) sans câbles, ou dans un mode sans fil ou Wi-Fi.

5. Procédé de contrôle antivol de carburant pour une application à un véhicule selon la revendication 1, dans lequel ledit signal d'alarme est envoyé à un centre de contrôle et/ou d'assistance, par radio au moyen de l'antenne du véhicule.

6. Procédé de contrôle antivol de carburant pour une application à un véhicule selon la revendication 1, dans lequel ledit signal d'alarme active des signaux d'alarme de véhicule, tels que des signaux visuels (des clignotants) ou des signaux acoustiques (des sirènes).

7. Procédé de contrôle antivol de carburant pour une application à un véhicule selon la revendication 1, dans lequel ledit signal d'alarme est généré lorsque la vitesse à laquelle le réservoir de carburant se vide dépasse une valeur de seuil.

8. Procédé de contrôle antivol de carburant pour une application à un véhicule selon l'une quelconque des revendications précédentes, dans lequel un ou plusieurs des signaux suivants sont utilisées :
- un signal provenant desdits capteurs périmétraux (S), détectant la présence de personnes ou d'obstacles ;
- un signal indiquant le niveau de carburant, qui est déjà actif lorsque le moteur est démarré, qui est envoyé à une unité de contrôle de véhicule ;
- un signal indiquant que le moteur est démarré, généré par l'alternateur entraîné par le moteur, l'absence de ce signal indique que le moteur est arrêté ;
- un signal indiquant que le véhicule est immobile, donné par le compteur de vitesse qui indique 0.

9. Dispositif antivol et de contrôle de carburant pour une application à un véhicule, **caractérisé en ce qu'**il comprend des moyens pour l'application du procédé selon l'une quelconque des revendications précédentes.

10. Programme d'ordinateur comprenant des moyens formant code de programme appropriés pour effectuer les étapes de l'une quelconque des revendications 1 à 8, lorsque ce programme est exécuté sur un ordinateur.

11. Moyens pouvant être lus par un ordinateur comprenant un programme enregistré, lesdits moyens pouvant être lus par un ordinateur comprenant des moyens formant code de programme appropriés pour effectuer les étapes selon les revendications 1 à 8, lorsque ledit programme est exécuté sur un ordinateur.
